(19) Europäisches Patentamt
European Patent Office
Office européen des brevets

(11) Publication number : 0 509 776 A2

(12) EUROPEAN PATENT APPLICATION

(21) Application number : 92303372.4

(22) Date of filing : 15.04.92

(51) Int. Cl.⁵ : G01S 5/00, G08G 1/01

(30) Priority : 19.04.91 JP 88363/91

(43) Date of publication of application :
21.10.92 Bulletin 92/43

(84) Designated Contracting States :
DE FR GB

(71) Applicant : PIONEER ELECTRONIC
CORPORATION
No. 4-1, Meguro 1-chome
Meguro-ku Tokyo-to (JP)

(72) Inventor : Tsuda, Youichirou, c/o Pioneer
Electronic Corp.
4-1, Meguro 1-chome
Meguro-ku, Tokyo (JP)
Inventor : Inazawa, Takeshi, c/o Pioneer
Electronic Corp.
4-1, Meguro 1-chome
Meguro-ku, Tokyo (JP)

(74) Representative : Brunner, Michael John
GILL JENNINGS & EVERY 53-64 Chancery
Lane
London WC2A 1HN (GB)

(54) Remote monitoring and controlling system for moving bodies.

(57) A center control apparatus (1) sequentially transmits (2) a request for transmitting information indicating a movement status of an associated moving body to the respective moving body terminals (3-1,...3-n) at predetermined intervals. In response to the request, each moving body automatically transmits (5) the movement status information to the center control apparatus. Such information may include a present position of the associated moving body, which is obtained by, e.g., a satellite-based position detecting device (4,20).

FIG. 1

The present invention relates to a remote monitoring and controlling of moving bodies such as humans, automobiles, aircraft and ships. More specifically, the invention relates to the system of the above type which is suitable for intensively controlling a plurality of moving bodies from one location.

Many companies presently conduct their business activities using automobiles (hereinafter referred to as "moving bodies") such as trucks, hired cars and taxicabs. If a company uses a large number of moving bodies, it may be required, in order to efficiently utilize the moving bodies, to precisely know the operating status of the respective moving bodies and to conduct the transportation management in accordance with the operating status.

presently, in most cases, the operation status is known by regular-basis communication from drivers to headquarters (e.g., transportation center) using a telephone, radio communication device, etc., or by drivers' daily reports.

However, in order to efficiently use the moving bodies, it is preferable to know their operating status on a real-time basis, specifically in such fields as cash transportation, load transportation and police.

While in order to know the operating status of the moving bodies it is necessary that each moving body communicate with the headquarters to report its status at proper intervals, it is desired that reporting items other than the items in which a driver should be involved be transmitted automatically, to lighten his burden.

An object of the present invention is to provide a remote monitoring and controlling system of moving bodies, which is capable of automatically transmitting movement status information of each of a plurality of moving bodies in intensively monitoring their movement status on a real-time basis.

According to the invention, a remote monitoring and controlling system of a plurality of moving bodies comprises:

    a center control apparatus comprising:

        means for producing a request signal for requesting each of the plurality of moving bodies to transmit movement status information indicating its own movement status;

        means for sequentially transmitting the request signal to the respective moving terminals at predetermined intervals; and .

        means for receiving the movement status information sequentially transmitted from the respective moving body terminals; and

    a moving body terminal, at each of the plurality of moving bodies, comprising:

        means, responsive to the request signal, for automatically producing the movement status information; and

        means for transmitting the movement status information to the center control apparatus.

In the drawings:-

Fig. 1 is a block diagram showing the whole construction of a remote monitoring and controlling system according to the present invention;

Fig. 2 is a block diagram showing the construction of a center control apparatus according to the invention;

Fig. 3 is a block diagram showing a moving body terminal according to the invention;

Fig. 4 is a block diagram showing an example of a display;

Fig. 5 is a flowchart showing an automatic communication operation between the center control apparatus and the respective moving body terminals;

Fig. 6 is a flowchart showing an automatic communication operation performed on the side of the moving body terminal;

Fig. 7 is a flowchart showing a total display operation of moving body information;

Fig. 8 is a diagram showing an example of a picture appearing on the display in the total display operation;

Fig. 9 is a diagram showing an example of a picture in which a movement locus of a moving body is displayed;

Fig. 10 is a flowchart showing an operation of searching positions of moving bodies in a specified area;

Fig. 11 is a diagram showing an example of a picture for defining the area of searching moving body positions; and

Fig. 12 is a diagram showing an example of a picture in which results of the position search are displayed.

Embodiments of the present invention are described hereinafter with reference to the accompanying drawings.

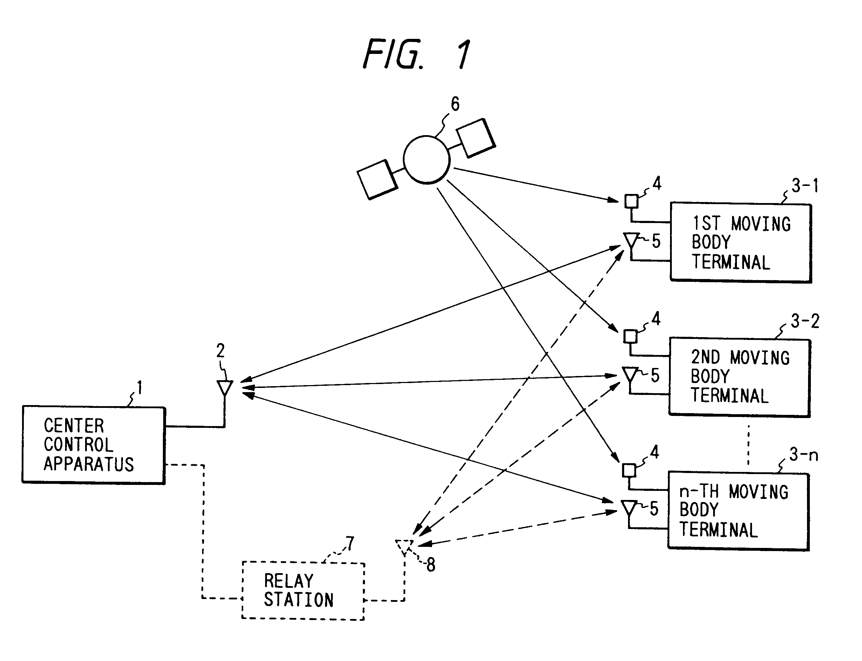

Fig. 1 is a block diagram of an entire system of remotely monitoring and controlling moving bodies. A center control apparatus 1 is installed at headquarters which are located at a place suitable for operating the system under consideration. On the other hand, a first moving body terminal 3-1, second moving body terminal 3-2, ...., n-th moving body terminal 3-n are installed on respective moving bodies which move according to their own operating schedules in a geographical area to which the System under consideration is applied. Each of the first to n-th moving body terminals 3-1, 3-1, ...., 3-n detects its own location, for instance, on the basis of a position-determining radio signal which is sent from an artificial satellite 6 and received by a GPS antenna 4, and transmits information on its present location to the center control apparatus 1 by radio communication via antennas 5, 2 or by wired communication via commercial lines (a relay station 7). The center control apparatus 1 displays an image containing a map of the operating area and movement information such as present locations of the respective moving bodies on the basis of the transmitted information on the present locations.

Each of the above units is described below in detail.

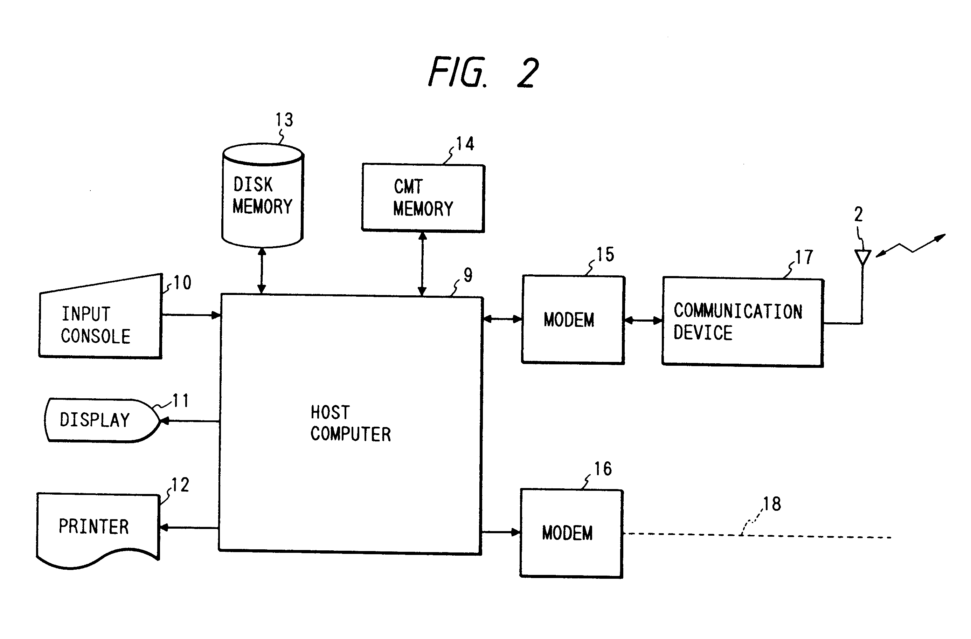

Fig. 2 shows the construction of the center control apparatus 1. A host computer 9 as a main part of the center control apparatus 1 controls not only the entire center control apparatus 1 but also the display operation according to the invention. Although not shown in Fig. 2, the host computer 9 can be an ordinary computer including a CPU, a ROM connected to the CPU via a signal bus, a RAM, an I/O port and other parts. The ROM stores control programs for the control of the entire center control apparatus 1, control programs for the display operation according to the invention, and other necessary programs. programs for the display operation and data collection and processing are directly related to the invention, and control algorithm.of such programs is described below.

Connected to the host computer 9, as I/O peripheral devices, are an input console 10 for entry of necessary data, a display 11 for the display operation, and a printer 12 for hard-copying displayed data. Also connected to the host computer 9 are a disk memory or CD-ROM 13 for storing collected data and for storing in advance map data etc., and a CMT (cassette magnetic tape) memory 14 for the system back-up etc. Further, a modem 15, communication device 17 and antenna 2 for exchanging data with the first to n-th moving bodies 3-1, 3-2, ...., 3-n are also connected to the host computer 9. Where communication with the moving bodies is performed via the relay station 7, commercial lines 18 and a modem 16 are employed between the relay station 7 and the host computer 9.

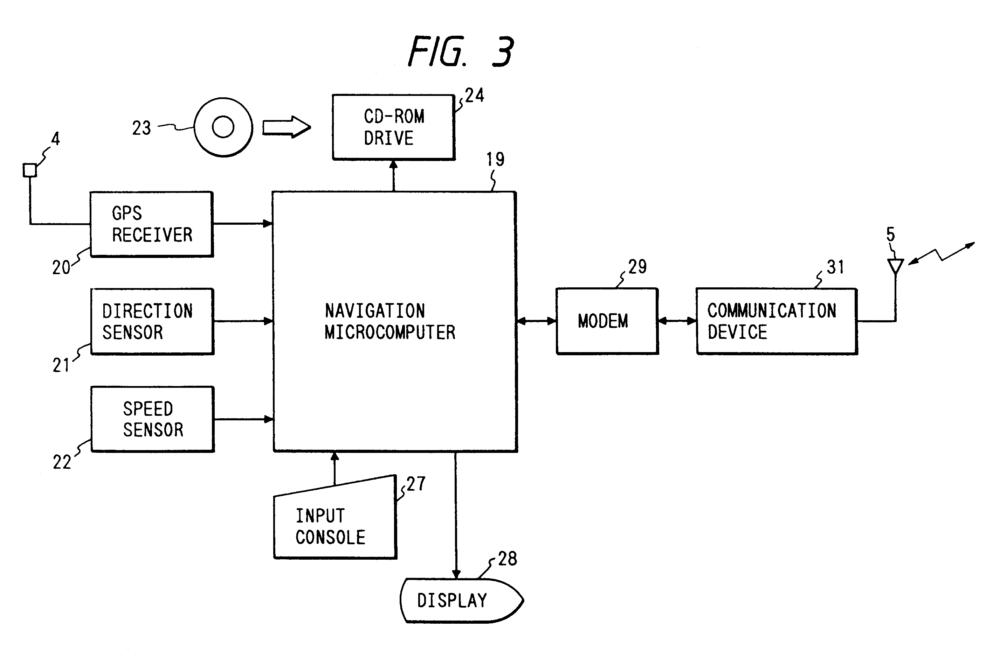

Fig. 3 shows the construction of the first moving body terminal 3-1. Since the other moving body terminals 3-2, ...., 3-n have the same construction, drawings and descriptions for those are omitted here. The first moving body terminal 3-1 basically acts as a navigation device and a communication device, and its main functions are performed by a navigation microcomputer 19, which can be an ordinary microcomputer. Although not shown in Fig. 3, the navigation microcomputer 19 includes a CPU, ROM, RAM, signal bus and I/O port. The navigation function and data communication function are performed in cooperation with peripheral devices (described later) while being controlled by control programs stored in the ROM.

Further, the first moving body terminal 3-1 has a GPS receiver 20 as a position detecting means. The GPS receiver 20, connected to the navigation microcomputer 19, receives a position-determining signal from the artificial satellite 6 by the GPS antenna 4, and provides, based on the received position-determining signal, the navigation microcomputer 19 with a signal indicating a movement distance and a movement direction of the first moving body. On the other hand, separately from the GPS-based position-determining device, the first moving body terminal 3-1 has an independent position-determining-device, which consists of a direction sensor 21 such as a magnetic gyro and a speed sensor 22 for detecting a vehicle speed from, e.g., a rotational speed of a crank shaft of the moving body. The navigation microcomputer 19 performs data processing on the basis of a movement direction signal from the direction sensor 21 and a speed signal from the speed sensor 22, to detect a present position of the moving body. Although the first moving body 3-1 may have either one of the two position-determining devices, reliability of the position detecting information will be improved by selecting appropriate device in accordance with a variation of a GPS radio signal state and an environment of the moving body. More specifically, the satellite-based device has an advantage of not being affected by the environment conditions, but will not operate correctly, e.g., in a tunnel. Further, the employment of the two devices provides an advantage that position-determining data of one device can be corrected using that of the other device.

The moving body terminal 3-1 has, as an I/O means, an input console 27 and a display 28. Further, it has a CD-ROM drive 24 for a CD-ROM 23 which stores map data etc. necessary for the navigating operation. A modem 29, communication device 31 and antenna 5 serve to transmit position data of the moving body to the center control apparatus 1 and to receive a message therefrom. The modem 29 operates when communication is performed via the relay station 7.

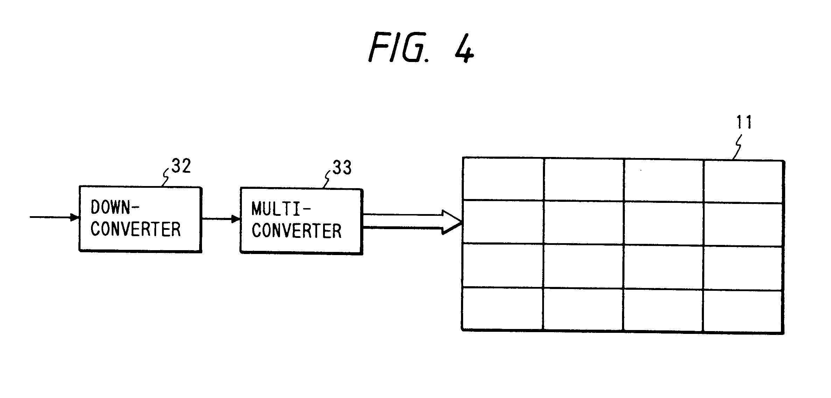

Fig. 4 shows an example of the display 11 that is installed in the center control apparatus 1. In large-scale transportation systems, it may be the case that the moving bodies are controlled by a plurality of operators. In such a case, it would be convenient that the positional information, map, etc. be displayed on a large screen to share those by the operators, instead of displaying those on individual displays for the respective operators. The large screen may be constructed by projection TV units arranged in matrix form. In this case, if an image is simply enlarged while the pixel density (516 scanning lines in the case of usual CRT displays) is kept unchanged, the enlarged image on the display 11 will become too thin. Therefore, it is required to increase the pixel density. To this end, the original image is divided into a plurality of sub-images corresponding to the respective projection TV units of the display 11, and necessary interpolation is performed. A down-converter 32 converts a computer image signal having non-interlaced scanning and a higher horizontal frequency of 24-70 kHz into an interlaced scanning image signal of an ordinary TV system. A multi-converter 33 divides the resultant signal into image signals for the respective TV units.

Next, the remote monitoring of the respective moving bodies is described. First, referring to Fig. 1, the total operation of the remote monitoring and controlling system of moving bodies is briefly described.

The center control apparatus 1 transmits, at appropriate time intervals, a request for transmitting movement status information (i.e., a request for reporting an own status) to the first to n-th moving body terminals 3-1, 3-2, ...., 3-n via the path of the antenna 2, antenna 5 and each of the first to n-th moving body terminals 3-1, 3-2, ...., 3-n. For instance receiving the position-determining radio signal from the artificial satellite 6, each of the first to n-th moving body terminals 3-1, 3-2, ...., 3-n detects its present location. In response to the above transmission request from the center control apparatus 1, each of the first to n-th moving body terminals 3-1, 3-2, ...., 3-n sequentially transmits its own present position detecting data via the path of the antenna 5, antenna 2 and center control apparatus 1 or via the path of the antenna 5, antenna 8, relay station 7 and center control apparatus 1. Collecting the position detecting data from the first to n-th moving body terminals 3-1, 3-2, ...., 3-n, the center control apparatus 1 performs necessary data processing and displays positions of the respective moving bodies.

Automatic Communication Operation

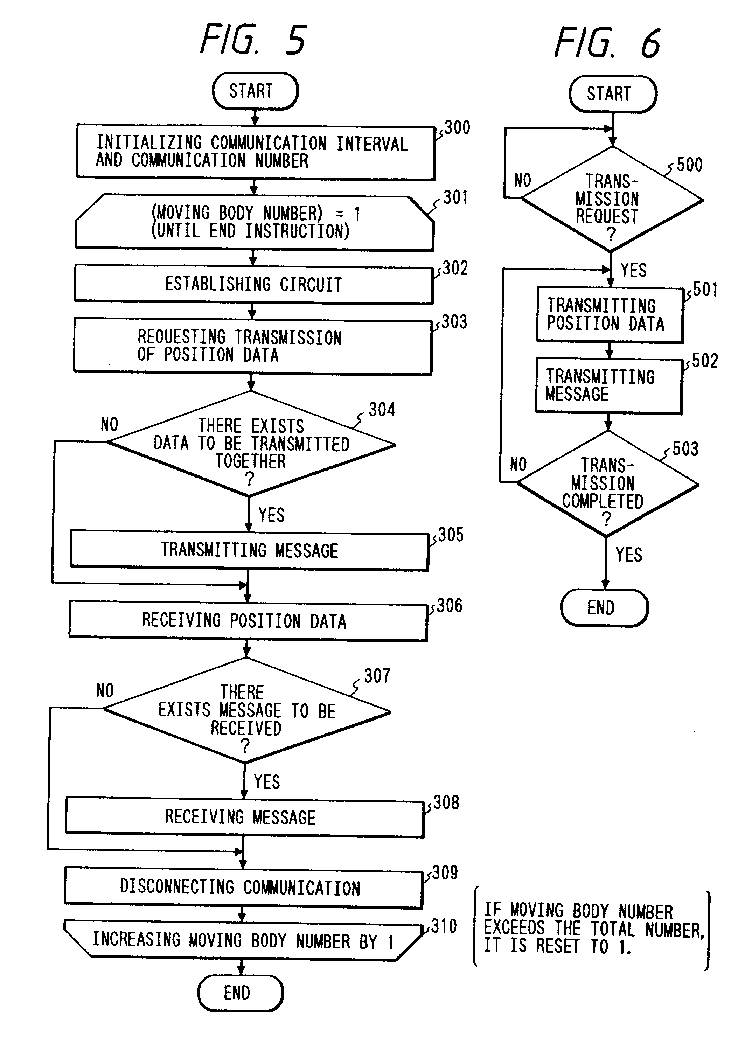

Fig. 5 is a flowchart showing an automatic communication operation between the center control apparatus 1 and the respective moving body terminals. As shown in Fig. 5, in step 300, a moving body communication number and a time interval of communication between the center control apparatus 1 and the moving body terminals are initialized. As described below, the host computer 9 of the center control apparatus 1 sequentially transmits, at the intervals as set above, a transmission request to the first to n-th moving body terminals 3-1, 3-2, ...., 3-n, and further processes return data sent from the first to n-th moving body terminals 3-1, 3-2, ...., 3-n.

A repeating routine from moving body number 1 to number n is set in steps 301 and 310 with an increment of one, to send the transmission request to all the moving bodies in the processes of one loop. In step 302, a communication circuit is established, which is either a radio transmission circuit between the antennas 2 and 5 or a circuit including the commercial lines 18, relay station 7, antennas 8 and 5. Then, in step 303, the request for the position detecting data is transmitted to the moving body of number 1 (i.e., first moving body terminal 3-1). In step 304, it is judged whether there exists data to be transmitted together, which may be, for instance, an operating schedule necessary for the operation of the moving body and traffic information. If the judgment result is "yes", a message is transmitted in step 305. If it is "no", the process jumps to step 306.

Fig. 6 is a flowchart showing an operation performed on the side of each of the first to n-th moving body terminals 3-1, 3-2, ...., 3-n. In step 500, it is judged whether a transmission request has been received from the center control apparatus 1. Having received the transmission request, the first moving body terminal 3-1 transmits to the center control apparatus 1 position detecting data which is obtained, for instance, by the satellite 6 and GPS receiver 20. If there exists a message to be transmitted from the first moving body terminal 3-1 to the center control apparatus 1, that message is transmitted in step 502 together with the position detecting data. If it is confirmed in step 503 that all the transmission has been completed, the return-transmitting operation in the first moving body terminal 3-1 is finished. The above series of operations are sequentially performed in the first to n-th moving body terminals 3-1, 3-2, ...., 3-n in the same manner in accordance with the increment in step 310 (Fig. 5).

Returning to Fig. 5, it is judged in step 307 whether there exists a message sent from the first moving body terminal 3-1. If the judgment result is "yes", the message is received in step 308, and the communication is disconnected after necessary processes are performed. Then, in step 310, moving body number is increased by one to perform processes of the transmission request and the message reception for the moving body of number 2 (i.e., moving body terminal 3-2).

In the above manner, the center control apparatus 1 transmits the transmission request to the first to n-th moving body terminals 3-1, 3-2, ...., 3-n at predetermined intervals on a regular basis. Upon reception of the request, the first to n-th moving body terminals 3-1, 3-2, ...., 3-n automatically transmits the position detecting data and message to the center control apparatus 1. Then, receiving those data and message, the center control apparatus 1 performs necessary data processing. The data thus processed are used to display the present positions of the respective moving bodies and, if necessary, their operating status.

Total Display Operation of Moving Body Information

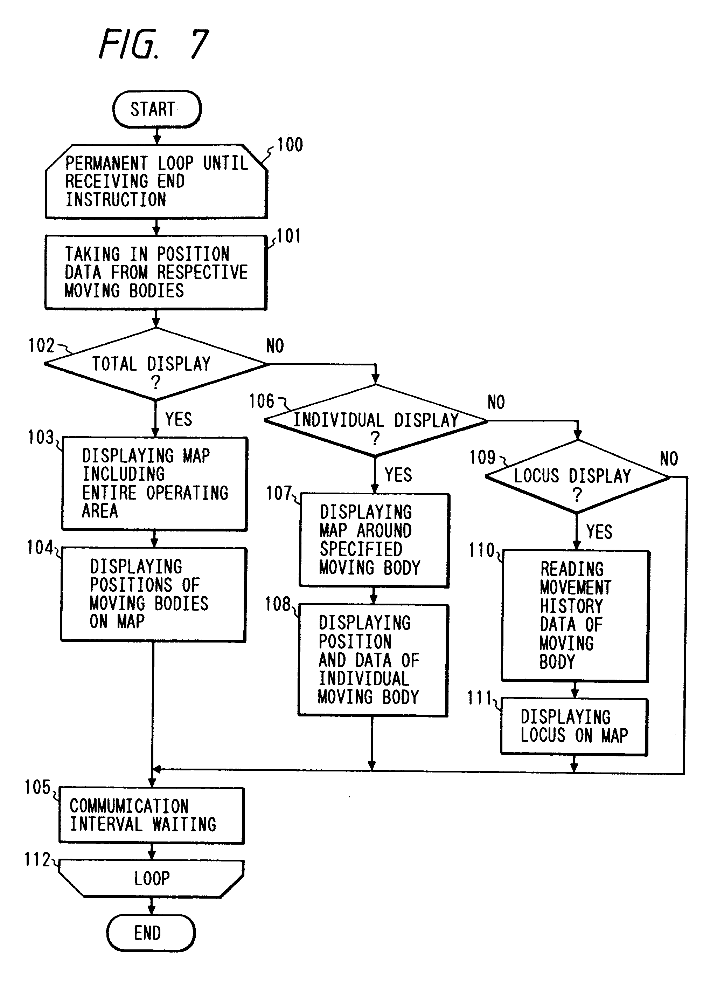

Fig. 7 is a flowchart of the total display operation of the moving body information. This algorithm is stored in the form of control programs in the ROM of the host computer 9 that is installed in the center control apparatus 1.

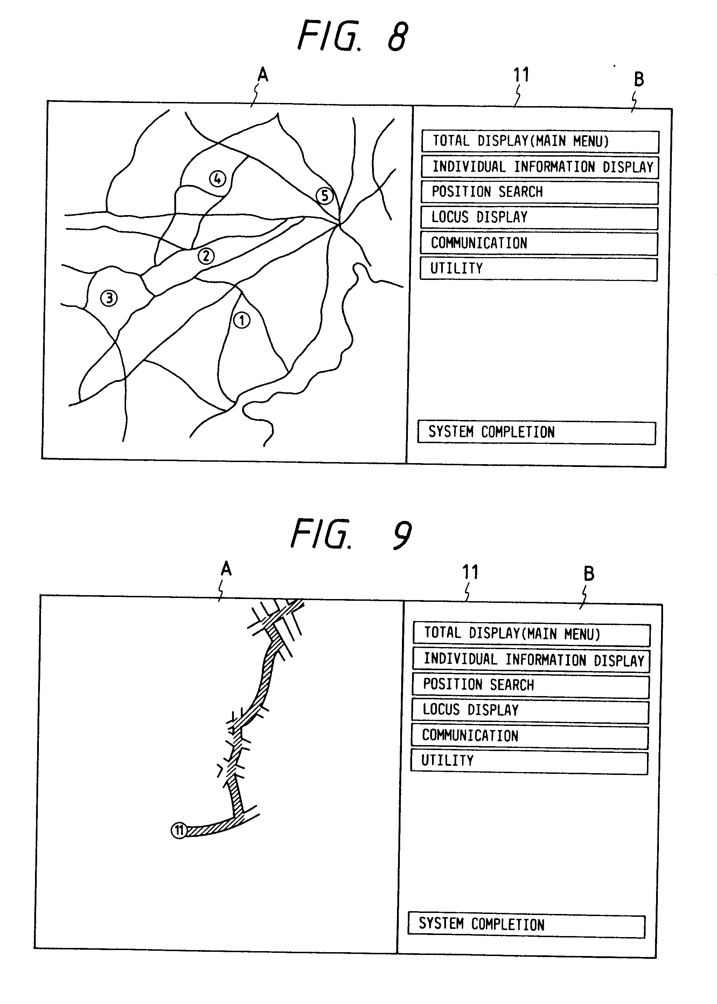

Referring to Fig. 7, in step 100, it is set that the display operation constitutes a loop which permanently continues to work until an end instruction is provided. Then, in step 101, the position data from the first to n-th moving body terminals 3-1, 3-2, ...., 3-n are taken in. In step 102, it is judged whether the display mode is "total display". In the "total display" mode, there is displayed the positions of the respective moving bodies over the entire operating area which is a jurisdictional area of the center control apparatus 1. If the judgment result of step 102 is "yes", the process proceeds to step 103, where a map of the entire operating area is displayed on the display 11. Data of this map is read out from the disk memory 13 shown in Fig. 2. Then, in step 104, the positions of the respective moving bodies are displayed on the display 11, that is, superimposed on the map. Fig. 8 shows an example of a picture to appear on the display 11.

As shown in Fig. 8, a displayed picture consists of a map display area A on the left side and a guidance display area B on the right side. Guidance for operators is displayed in the guidance display area B.

Returning to Fig. 7, while making control to display positions of the respective moving bodies on the map, the host computer 9 executes a waiting process (step 105) for the communication with the first to n-th moving body terminals 3-1, 3-2, ...., 3-n. Then, the process returns to step 101 to repeat the above.

Where the judgment result of step 102 is "no", the process goes to step 106 for judging whether the mode of displaying a position of each moving body is to be effected. If the judgment result of step 106 is "yes", the process goes to step 107 for displaying a map of an area around the location of a specified moving body on the basis of position data of that moving body. Then, in step 108, the position and related data of the specified moving body are superimposed on the map.

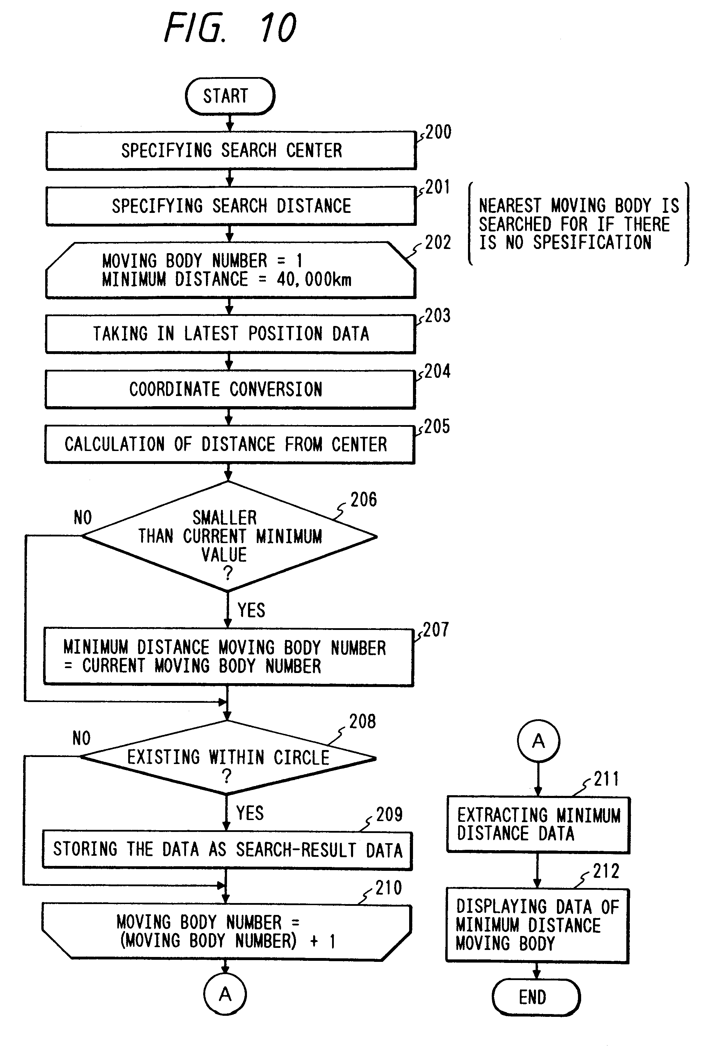

Where the judgment result of step 106 is "no", the process goes to step 109. In step 109, it is judged whether the "locus display" mode of displaying a movement history, i.e., a locus of a moving body under attention is to be effected. If the judgment is affirmative, the process goes to step 110, where movement history data representing present and past positions of the moving body under attention are read out from the RAM of the host computer 9, and continuous locus data is generated. Then, the process goes to step 111, where a movement locus of the moving body under attention is displayed together with a map. Fig. 9 shows an example of a picture appearing on the display 11, where the movement locus of the moving body under attention until the present time is indicated by hatching.

## Search Display Operation of moving Body Information

The above total display operation is for the case of displaying positions of the moving bodies in the entire operating area, i.e., the jurisdictional area of the center control apparatus 1. On the other hand, it is often desired that positions of the moving bodies in a particular region of the entire area be known. Fig. 10 is a flowchart of searching positions of the moving bodies in such a case.

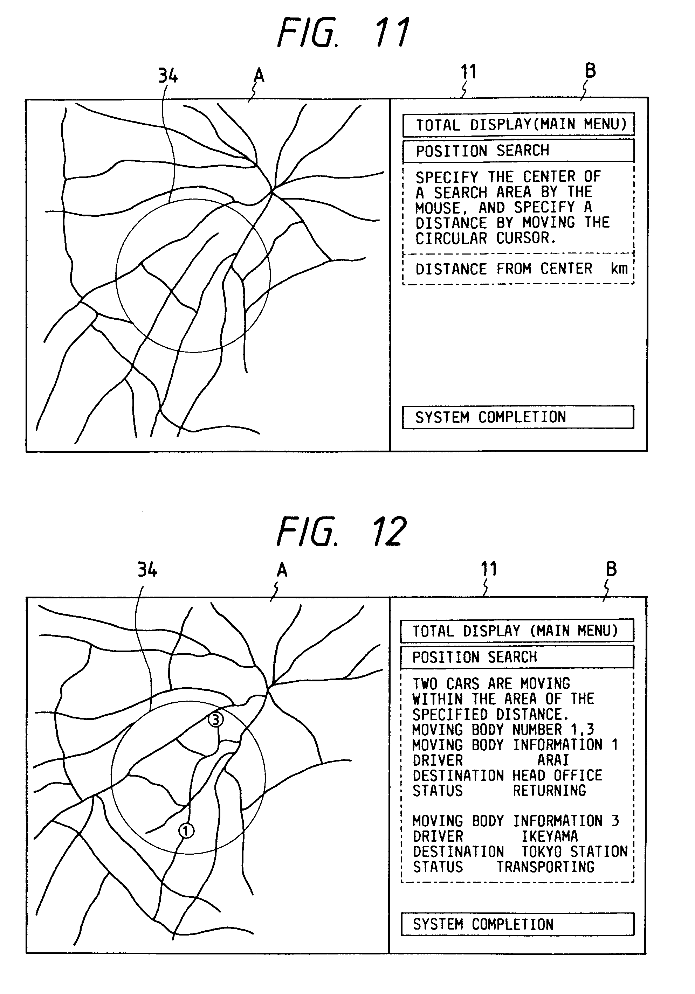

prior to the position search, a picture as shown in Fig. 11 is first displayed on the display 11. Referring to Fig. 10, when an operator inputs search center data to the host computer 9 through the input console 10, the search center data thus input is taken in in step 200. Then, the operator inputs through the input console 10 search distance data to specify a search distance, i.e., to define the search area. As a modification, where no search distance is specified, a moving body nearest to the search center may be searched for. Next, in step 202, a search operation is started with a moving body number set to 1 and a minimum distance, e.g., at 40,000 km. The search is conducted by repeating processes of steps 202-209 while the moving body number is started from 1 and sequentially increased by one in step 210. Latest position data of a moving body of number 1 is taken in in step 203, subjected to coordinate conversion in step 204, and a distance between the moving body of number 1 and the search center is calculated in step 205. In step 206, it is judged whether the calculated distance value is smaller than the present minimum distance. At the initial stage where there is no data prior to that of the moving body of number 1, the judgment result of step 206 should be "yes", and the process goes to step 207. In step 207, the moving body of number 1 is set as a moving body located at a minimum distance position. Therefore, for the next moving body of number 2, the judgment of step 206 is made with the distance of the moving body of number 1 as the minimum distance. In step 208, it is judged whether the subject moving body of number 1 is located within a circle 34 (see Fig. 11) whose center and radius are the search center (step 200) and the search distance (step 201). If the judgment is affirmative, the moving body number 1 is stored in step 209 as search-result data. If, on the other hand, the judgment is negative, the process jumps to step 210, where the moving body number is increased by one to deal with position data of the next moving body of number 2. In the same manner, the processes of steps 202-210 are repeated. When such processes have completed for all the moving bodies, the process goes to step 211. In step 211, the minimum distance data among the stored distance data of the respective moving bodies is extracted. Then, in step 212, the data of the minimum distance moving body (i.e., the moving body closest to the search center) is displayed.

Fig. 12 shows an example of a displayed picture in which a circle 34 of the search area is defined in the processes of steps 202-210 and the moving bodies of numbers 1 and 3 exist within that area. In the picture of Fig. 12, the circle 34 indicating the search area and the moving body positions are displayed together with a map in the map display area A, and data related to these moving bodies are displayed in the guidance display area B.

As described in the foregoing, according to the invention, when the center control apparatus requests the moving body terminal to transmit its movement status information, the moving body terminal, responding to that request, automatically transmits its movement status information to the center control apparatus. As a result, the operation of a plurality of moving bodies can be controlled more efficiently without burdening a driver.

**Claims**

1. A remote monitoring and controlling system for a plurality of moving bodies, comprising:

    a center control apparatus (1) comprising:

       means (9) for producing a request signal for requesting each of the plurality of moving bodies to transmit movement status information indicating its own movement status;

       means (2,15,17;16,18) for sequentially transmitting the request signal to the respective moving terminals at predetermined intervals; and

       means (2,15,17;16,18) for receiving the movement status information sequentially transmitted from the respective moving body terminals; and

    a moving body terminal (3-1,...3-n), at each of the plurality of moving bodies, comprising:

       means (19), responsive to the request signal, for automatically producing the movement status information; and

       means (5,29,31) for transmitting the movement status information to the center control apparatus.

2. The system of claim 1, wherein the moving body terminal further comprises means (4,20;21,22) for detecting a present position of an associated moving body to produce positional information, and wherein the movement status information includes the positional information.

3. The system of claim 2, wherein the position detecting means comprises:

    an antenna (4) for receiving a position-determining signal transmitted from a GPS satellite;

    a GPS receiver (20) for producing a movement distance signal and a direction signal based on the received position-determining signal; and

    data processing device (19) for producing the positional information of the associated moving body based on the movement distance signal and the direction signal.

4. The system of claim 2, wherein the position detecting means comprises:

    a speed detecting device (22), provided in the associated moving body, for detecting a moving speed of the associated moving body to produce a speed signal;

    a movement direction detecting device (21), provided in the associated moving body, for detecting a moving direction of the associated moving body to produce a direction signal; and

    a data processing device (19) for producing the positional information based on the speed signal and the direction signal.

5. The system of claim 1, wherein the center control apparatus transmits the request signal and receives the movement status information in the form of a radio signal.

6. The system of claim 1, wherein the center control apparatus transmits the request signal and receives the movement status information via a relay station (7) and commercial telephone lines (18).

# FIG. 1

## FIG. 2

EP 0 509 776 A2

FIG. 3

EP 0 509 776 A2

FIG. 4

## FIG. 5

START

INITIALIZING COMMUNICATION INTERVAL
AND COMMUNICATION NUMBER ⌐300

(MOVING BODY NUMBER) = 1
(UNTIL END INSTRUCTION) ⌐301

ESTABLISHING CIRCUIT ⌐302

REQUESTING TRANSMISSION
OF POSITION DATA ⌐303

THERE EXISTS
DATA TO BE TRANSMITTED
TOGETHER
? ⌐304
NO
YES

TRANSMITTING MESSAGE ⌐305

RECEIVING POSITION DATA ⌐306

THERE
EXISTS MESSAGE TO BE
RECEIVED
? ⌐307
NO
YES

RECEIVING MESSAGE ⌐308

DISCONNECTING COMMUNICATION ⌐309

INCREASING MOVING BODY NUMBER BY 1 ⌐310

END

## FIG. 6

START

TRANS-
MISSION
REQUEST
? ⌐500
NO
YES

TRANSMITTING
POSITION DATA ⌐501

TRANSMITTING
MESSAGE ⌐502

TRANS-
MISSION
COMPLETED
? ⌐503
NO
YES

END

IF MOVING BODY NUMBER
EXCEEDS THE TOTAL NUMBER,
IT IS RESET TO 1.

# FIG. 7

```
                    ( START )
                        │
                        ▼
    ┌──────────────────────────────┐  ⌐100
    │ PERMANENT LOOP UNTIL         │
    │ RECEIVING END                │
    │ INSTRUCTION                  │
    └──────────────────────────────┘
                        │
                        ▼
    ┌──────────────────────────────┐  ⌐101
    │ TAKING IN POSITION           │
    │ DATA FROM RESPECTIVE         │
    │ MOVING BODIES                │
    └──────────────────────────────┘
                        │
                        ▼
        102⌐                            NO
          ◇ TOTAL DISPLAY ───────────────────────┐
            ?                                     │
              │ YES                               ▼
              │                         106⌐                    NO
              ▼                           ◇ INDIVIDUAL DISPLAY ──────────┐
    103⌐                                    ?                            │
    ┌──────────────────┐                      │ YES                     ▼
    │ DISPLAYING MAP   │            107⌐       │            109⌐              NO
    │ INCLUDING        │            ┌──────────────────┐       ◇ LOCUS DISPLAY ──────┐
    │ ENTIRE OPERATING │            │ DISPLAYING       │         ?                   │
    │ AREA             │            │ MAP AROUND       │           │ YES             │
    └──────────────────┘            │ SPECIFIED        │     110⌐   │                │
              │                     │ MOVING BODY      │    ┌──────────────┐         │
    104⌐      │                     └──────────────────┘    │ READING      │         │
    ┌──────────────────┐      108⌐         │                │ MOVEMENT     │         │
    │ DISPLAYING       │      ┌──────────────────┐          │ HISTORY      │         │
    │ POSITIONS OF     │      │ DISPLAYING       │          │ DATA OF      │         │
    │ MOVING BODIES    │      │ POSITION         │          │ MOVING       │         │
    │ ON MAP           │      │ AND DATA OF      │          │ BODY         │         │
    └──────────────────┘      │ INDIVIDUAL       │          └──────────────┘         │
              │               │ MOVING BODY      │      111⌐   │                     │
              │               └──────────────────┘    ┌──────────────┐               │
              │                         │              │ DISPLAYING   │               │
              │                         │              │ LOCUS ON MAP │               │
              │                         │              └──────────────┘               │
              │                         │                      │                      │
              │                         └───────────┬──────────┴──────────────────────┘
              └─────────────────────────────────────┤
    105⌐                                             │
    ┌──────────────────┐                             │
    │ COMMUNICATION    │◄────────────────────────────┘
    │ INTERVAL WAITING │
    └──────────────────┘
              │
    112⌐      ▼
    ┌──────────────────┐
    │      LOOP        │
    └──────────────────┘
              │
              ▼
          ( END )
```

# FIG. 8

A      11      B

| TOTAL DISPLAY(MAIN MENU) |
| INDIVIDUAL INFORMATION DISPLAY |
| POSITION SEARCH |
| LOCUS DISPLAY |
| COMMUNICATION |
| UTILITY |

| SYSTEM COMPLETION |

# FIG. 9

A      11      B

| TOTAL DISPLAY(MAIN MENU) |
| INDIVIDUAL INFORMATION DISPLAY |
| POSITION SEARCH |
| LOCUS DISPLAY |
| COMMUNICATION |
| UTILITY |

| SYSTEM COMPLETION |

# FIG. 10

```
                    ( START )
                        │
                        ▼
   ┌────────────────────────────────────────┐  ╭200
   │      SPECIFYING SEARCH CENTER           │
   └────────────────────────────────────────┘
                        │
                        ▼
   ┌────────────────────────────────────────┐  ╭201      ┌─────────────────────┐
   │     SPECIFYING SEARCH DISTANCE          │           │ NEAREST MOVING BODY IS │
   └────────────────────────────────────────┘           │ SEARCHED FOR IF THERE  │
                        │                                │ IS NO SPESIFICATION    │
                        ▼                                └─────────────────────┘
   ┌────────────────────────────────────────┐  ╭202
   │   MOVING BODY NUMBER = 1                │
   │   MINIMUM DISTANCE = 40,000km           │
   └────────────────────────────────────────┘
                        │
                        ▼
   ┌────────────────────────────────────────┐  ╭203
   │     TAKING IN LATEST POSITION DATA      │
   └────────────────────────────────────────┘
                        │
                        ▼
   ┌────────────────────────────────────────┐  ╭204
   │        COORDINATE CONVERSION            │
   └────────────────────────────────────────┘
                        │
                        ▼
   ┌────────────────────────────────────────┐  ╭205
   │   CALCULATION OF DISTANCE FROM CENTER   │
   └────────────────────────────────────────┘
                        │
                        ▼
         NO           ╱ SMALLER ╲               206
      ◄──────────────< THAN CURRENT MINIMUM >
      │                ╲  VALUE  ╱
      │                  ╲  ?  ╱
      │                    │ YES
      │                    ▼
      │   ┌────────────────────────────────────┐  ╭207
      │   │ MINIMUM DISTANCE MOVING BODY NUMBER │
      │   │ = CURRENT MOVING BODY NUMBER        │
      │   └────────────────────────────────────┘
      │                    │
      └──────────►─────────┤
                           ▼
         NO           ╱ EXISTING ╲              208
      ◄──────────────< WITHIN CIRCLE >
      │                ╲    ?    ╱
      │                    │ YES
      │                    ▼
      │   ┌────────────────────────────────────┐  ╭209
      │   │ STORING THE DATA AS SEARCH-RESULT DATA │
      │   └────────────────────────────────────┘
      │                    │
      └──────────►─────────┤
                           ▼
   ┌────────────────────────────────────────┐  ╭210
   │   MOVING BODY NUMBER =                   │
   │   (MOVING BODY NUMBER) + 1               │
   └────────────────────────────────────────┘
                        │
                        ▼
                      ( A )


                  ( A )
                    │
                    ▼
   ┌────────────────────┐  ╭211
   │ EXTRACTING MINIMUM  │
   │ DISTANCE DATA       │
   └────────────────────┘
                    │
                    ▼
   ┌────────────────────┐  ╭212
   │ DISPLAYING DATA OF  │
   │ MINIMUM DISTANCE    │
   │ MOVING BODY         │
   └────────────────────┘
                    │
                    ▼
                ( END )
```

## FIG. 11

TOTAL DISPLAY(MAIN MENU)

POSITION SEARCH

SPECIFY THE CENTER OF
A SEARCH AREA BY THE
MOUSE, AND SPECIFY A
DISTANCE BY MOVING THE
CIRCULAR CURSOR.

DISTANCE FROM CENTER   km

SYSTEM COMPLETION

## FIG. 12

TOTAL DISPLAY (MAIN MENU)

POSITION SEARCH

TWO CARS ARE MOVING
WITHIN THE AREA OF THE
SPECIFIED DISTANCE.
MOVING BODY NUMBER 1,3
MOVING BODY INFORMATION 1
DRIVER        ARAI
DESTINATION HEAD OFFICE
STATUS        RETURNING

MOVING BODY INFORMATION 3
DRIVER        IKEYAMA
DESTINATION  TOKYO STATION
STATUS     TRANSPORTING

SYSTEM COMPLETION